# EUROPEAN PATENT APPLICATION

(11) **EP 1 936 480 A1**
(43) Date of publication of application: **25.06.2008**
(21) Application number: 06127130.0
(22) Date of filing: 22.12.2006
(51) Int. Cl.: G06F 3/044

(54) **Capacitive input device**

(71) Applicant: IEE INTERNATIONAL ELECTRONICS & ENGINEERING S.A., 6468 Echternach (LU)
(72) Inventor: Serban, Bogdan, 3376, Leudelange (LU); Chaudron, Julien, 57570, Cattenom (FR); Hunewald, Oliver, 54669, Bollendorf (DE); Boyer, Philippe, 57570, Boust (FR)
(74) Representative: Beissel, Jean

(57) **Abstract**

An input device comprises a support plate and a cover plate. The cover plate has an upper surface facing away from the support plate and a lower surface facing towards the support plate, and includes a capacitive sensing arrangement associated with an input zone for capacitively detecting position and/or movement of a user's finger or stylus. One or more spacers arranged at the periphery of the input zone mount the cover plate on the support plate in such a way that the cover plate spans over the support plate in the input zone. The cover plate is designed with a rigidity such that a user may depress it towards the support plate in the input zone. The input device comprises a pressure-responsive switch associated with the cover plate and the support plate. The pressure-responsive switch includes at least one first electric circuit element arranged on the lower surface of the cover plate and at least one second electric circuit element arranged on the support plate in facing relationship with the at least one first electric circuit element in such a way that the at least one first electric circuit element and the at least one second electric circuit element can be brought into contact when the cover plate is depressed towards the support plate. The rigidity of the cover plate is such that, with increasing force acting on the first surface in direction of the support plate, a physical contact zone develops initially at a defined central point of the input zone and then gradually extends towards the periphery of the input zone and the at least one first electric circuit element and the at least one second electric circuit element of the pressure-responsive switch are arranged in such a way that an electrical contact is only established if the physical contact zone exceeds a predefined radius around the central point of the input zone.

## Description

### Technical field

The present invention generally relates to a capacitive input device comprising, in particular a pressure-responsive switch, e.g. to provide mouse-click functionality.

### Background Art

Capacitive sensing technique is conventionally used in input devices, such as touch pads for detecting position and/or movement of a user's finger, a stylus or the like and thereby enabling the user to enter commands to an electronic appliance.

As exposed, for instance, in US 2005/011768, capacitive sensing touch pads may contain several layers of material. For example, the touch pads may include a protective shield layer, one or more electrode layers and a circuit board. The protective shield layer typically covers the one or more electrode layers, and the one or more electrode layers are generally disposed on a front side of the circuit board. The protective shield layer is the part of the touch pad that is touched by the user to implement cursor movements on a display screen. The electrode layer (or layers), on the other hand, is used to interpret the x, y position of the user's finger when the user's finger is resting or moving on the protective shield. The one or more electrode layers typically comprise a plurality of electrodes that are positioned in columns and rows so as to form a grid array. The columns and rows may be based on the Cartesian coordinate system, in which case the rows and columns correspond to the x and y directions. Alternative positioning of the individual electrodes, e.g. on concentric circles or on a spiral, is also possible.

The touch pad may also include sensing electronics for detecting signals associated with the electrodes. For example, the sensing electronics may be adapted to detect the change in capacitance at each of the electrodes as the finger or stylus passes over the grid. By way of example, the sensing electronics may include a microprocessor or an application-specific integrated circuit (ASIC) configured to measure a quantity representative of capacitance in the electrodes and to compute the position of finger movement based on the quantity representative of capacitance in each of the electrodes.

In a capacitive input device, (mouse) click commands can be associated to the action of a user tapping their finger on the surface of the input device. Capacitive input devices may be made pressure-sensitive by enabling them to sense the surface area covered by a user's finger and to interpret the finger contact surface area as a quantity indicative of the pressure exerted. Of particular concern in capacitive input devices is differentiation between intended and unintended user action. This problem occurs, in particular, with respect to the mouse click functionality, because the threshold of finger contact surface area is tricky to adjust. It should also be noted that the relationship between finger contact surface area and exerted pressure may not be the same for all users. A given threshold may be well suited for users with small-sized fingers but inappropriate for users with bigger fingers.

US 6,424,338 mentions that mouse clicks can also be implemented by a switch responsive to downward pressure positioned underneath a touch pad surface.

### Technical problem

It is an object of the present invention to provide an improved capacitive input device having a pressure-responsive switch arranged underneath it.

This object is achieved by an input device as claimed in claim 1.

### General Description of the Invention

The input device (e.g. a button or a touch pad) according to the present invention comprises a support plate and a cover plate. The cover plate has an upper surface facing away from the support plate and a lower surface facing towards the support plate, and includes a capacitive sensing arrangement associated with an input zone for capacitively detecting position and/or movement of a user's finger or stylus when the user operates the capacitive input device by moving their finger or stylus on or slightly above the upper surface within the boundaries of the input zone. The input device comprises one or more spacers (preferably rigid spacers), arranged at the periphery of the input zone, that mount the cover plate on the support plate in such a way that the cover plate spans over the support plate in the input zone. It should be noted that the term "span", as used herein, does not relate to a specific tension of the cover plate, but is intended to relate that the cover plate is not supported in the input zone. The cover plate is designed with a rigidity such that a user may depress it towards the support plate in the input zone. The input device further comprises a pressure-responsive switch associated with the cover plate and the support plate. The pressure-responsive switch includes at least one first electric circuit element arranged on the lower surface of the cover plate and at least one second electric circuit element arranged on the support plate in facing relationship with the at least one first electric circuit element in such a way that the at least one first electric circuit element and the at least one second electric circuit element can be brought into contact when the cover plate is depressed towards the support plate. According to an important aspect of the invention, the rigidity of the cover plate is such that, with increasing force acting on the first surface in direction of the support plate, a physical contact zone develops initially at a defined central point of the input zone and then gradually extends towards the periphery of the input zone and the at least one first electric circuit element and the at least one second electric circuit element of the pressure-responsive switch are arranged in such a way that an electrical contact is only established if the physical contact zone exceeds a predefined radius around the central point of the input zone.

Those skilled are aware that the force necessary to bring the cover plate in contact with the support plate decreases with increasing distance of the point of application of the force from the spacer(s). Depending on where in the input zone a user presses the cover plate down, they will have to exert a higher or lower force to make the cover plate contact the support plate. If a mechanical contact between the cover plate and the support plate caused immediately an electrical contact (i.e. an activation of the pressure-responsive switch), the minimum activation force threshold would substantially vary over the input area. In the central region, the pressure-responsive switch could thus be excessively sensitive, leading to undesired activations. The main advantage of the present invention is a more homogeneous minimum activation force threshold over the input zone. Indeed, since a mechanical contact between the cover plate and the support plate, localised in the central region of the input zone (i.e. not extending beyond a circle of the predefined radius), does not cause an electrical contact, the sensitivity of the switch to a centrally applied force is reduced. When such a a centrally applied force increases, the physical contact zone increases and eventually reaches (at least partially) beyond the circle of the predefined radius so that an electrical contact results. Preferably, the predefined radius around the central point is comprised in the range from 10 to 50% of the smallest lateral extension of the input zone. More preferably, the predefined radius around the central point is comprised in the range from 20 to 40% of the smallest lateral extension of the input zone. It is understood that smallest lateral extension herein means the diameter of the biggest circle that could be inscribed into the input zone.

Advantageously, the capacitive sensing arrangement may comprise a plurality of electrodes arranged in a matrix configuration. The matrix configuration may be any pattern suitable for the application, it may be, in particular, rectangular, circular or hexagonal. The capacitive sensing arrangement may be configured for detecting the absolute position and/or movement of the finger or stylus, e.g. for emulating discrete buttons or a keypad. Alternatively or additionally, the capacitive sensing arrangement may be configured for detecting relative positions and/or movements of the finger or stylus, e.g. for controlling a cursor on a display.

According to a preferred embodiment of the invention, the pressure-responsive switch is configured as a through-mode switch. This means that the input lead is arranged on the cover plate and the output lead on the support plate (or vice versa) and that the electrical contact between the input and output leads is established via an electrode on the lower surface of the cover plate and an electrode on the upper surface of the support plate, which get into contact with one another.

According to an alternative preferred embodiment of the invention, the pressure-responsive switch is configured as a shunt-mode switch. This means that the input and output leads are arrange on the same substrate, i.e. they are both arranged on the cover plate or both on the support plate. The pressure-responsive switch comprises, in this case, at least a first electrode and a second electrode, connected respectively to the input and the output lead, arranged in the input zone on the same substrate (here: either the cover plate or the support plate) without a direct electrical contact between them. A shunt electrode is arranged opposite the first and second electrodes on the other plate so that when the shunt electrode is pressed on the first and the second electrodes, an electrical contact is established between the latter via the shunt electrode.

Preferably, at least one of the at least one first electric circuit element and the at least one second electric circuit element is spaced from the central point by the predefined radius. In other words, either on the cover plate or on the support plate, there is no electric circuit element within the circle of the predefined radius, centred on the defined central point. It is emphasised that this configuration is preferred but that there are configurations of the electric circuit elements on the cover plate and the support plate that do not comply with this preferred embodiment but that have the desired effect. A more general requirement may be that the (virtual) vertical projection of the first electric circuit arrangement into the plane of the second electric circuit arrangement overlaps with the second electric circuit arrangement only outside a circle of the predefined radius centred on the central point. In case of a shunt-mode switch, this means that the (virtual) vertical projection of the shunt electrode does not overlap with the first and second electrodes inside the said circle but does overlap with them outside the said circle. In case of a through-mode arrangement, it means that the (virtual) vertical projection of the electrode connected to the input lead does not overlap with the electrode connected to the output lead inside the said circle but does overlap with it outside the said circle.

The present invention further relates to an electronic appliance, such as e.g. a washing machine, a refrigerator, a toaster, a telephone (in particular a cell phone), a computer (in particular a laptop or a handheld) or the like, comprising an input device as disclosed herein.

### Brief Description of the Drawings

A preferred embodiment of the invention will now be described, by way of example, with reference to the accompanying drawings in which:
Fig. 1 is a cross sectional view of an input device as the user exerts no force upon the cover thereof;
Fig. 2 shows the same input device when the user exerts a small force in the central region of the input zone;
Fig. 3 shows the input device when the user exerts a higher force in the central region of the input zone.
Fig. 4 shows the input device when the user exerts a small off-centre force on the cover;
Fig. 5 shows the input device when the user exerts a higher off-centre force on the cover.

### Description of a Preferred Embodiment

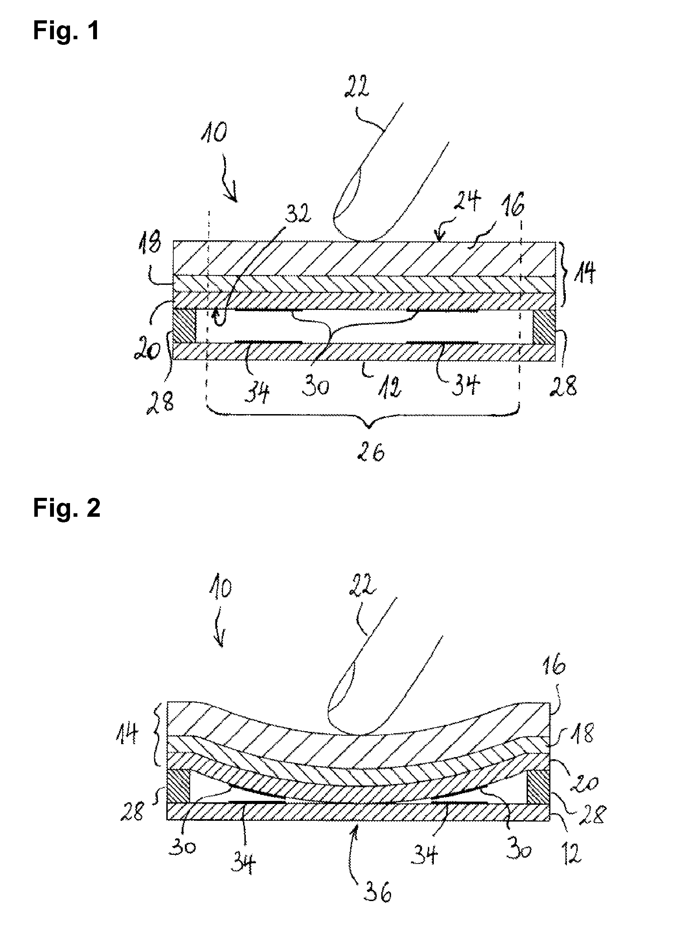

Figs. 1 to 5 show cross-sectional views of a capacitive input device 10 in different situations. The input device 10 comprises a base plate 12 and a cover plate 14 formed from a plurality of layers 16, 18, 20. The cover plate 14 comprises a protective layer 16, an electrode layer 18 including a grid array of electrodes forming a capacitive sensing arrangement, and a substrate layer 20 arranged underneath the electrode layer 18. To operate the input device 10, a user may move or place their finger 22 on or slightly above the upper surface 24 of the protective layer 16, within the boundaries of the input zone (indicated at reference numeral 26) of the input device 10. The movement and/or the position of the finger 22 is detected by the capacitive sensing arrangement 18.

The cover plate 14 is fixed on the base plate 12 by rigid spacers 28 arranged at the periphery of the input zone 26. The cover plate 14 is self-supporting in the input zone 26. It should be noted that instead of several individual spacers, one might also use a single-piece spacer having an opening therein, which extends from the cover plate to the base plate and the contour of which extends substantially alongside the boundary of the input zone.

A pressure-responsive switch is arranged in the interstice between the cover plate 14 and the base plate 12. In this example, the pressure-responsive switch is implemented as a through-mode switch, including a first electrode 30 arranged on the lower surface 32 of the substrate layer 20 of the cover plate 14 and a second electrode 34 arranged on the base plate 12, opposite the first electrode 30. When the first and second electrodes 30, 34 are brought into contact, upon depression of the cover plate 14 onto the base plate12, an electrical current may flow between the first and second electrodes 30,34.

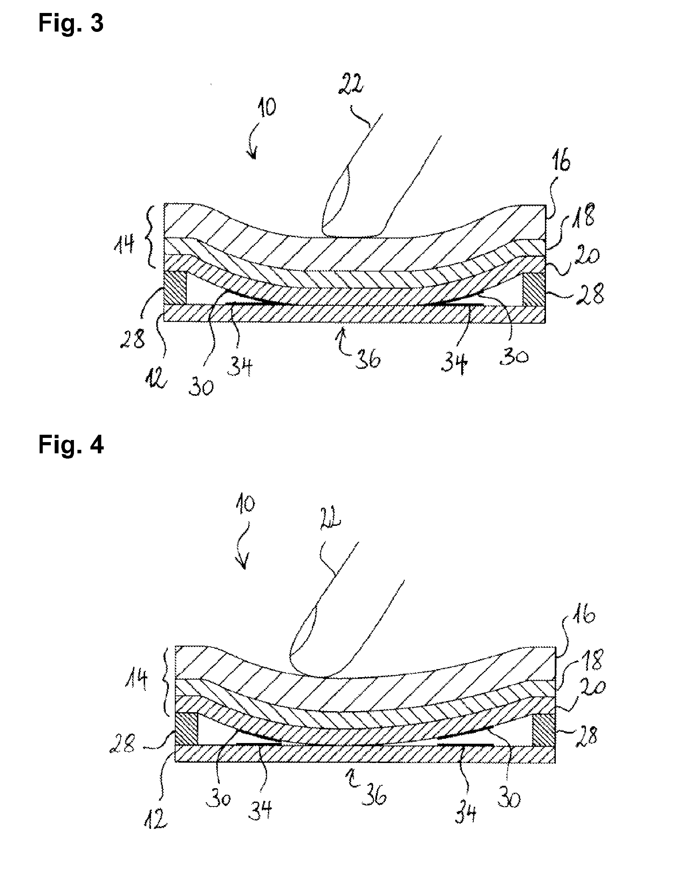

Fig. 1 illustrates the situation where the user exerts no significant force on the cover plate 14. The cover plate 14 remains substantially flat and the distance between the cover plate and the base plate is substantially the same for the entire input area. Figs. 2 to 5 illustrate the behaviour of the input device 10 under different conditions of loading by the user. As said before, the cover plate 14 has rigidity such that, with increasing force acting on the cover plate in direction of the base plate, a physical contact zone develops initially at a defined central point 36 of the input zone. In Fig. 2, this is shown for a small centrally applied force. The first and second electrodes 30, 34 are not in contact with one another because they do not extend into the central region around the point of initial contact. In Fig. 3, it is shown what happens as the centrally applied force increases: the zone of physical contact between the cover plate 14 increases towards the periphery of the input zone, whereby the first and second electrodes 30, 34 eventually get into contact.

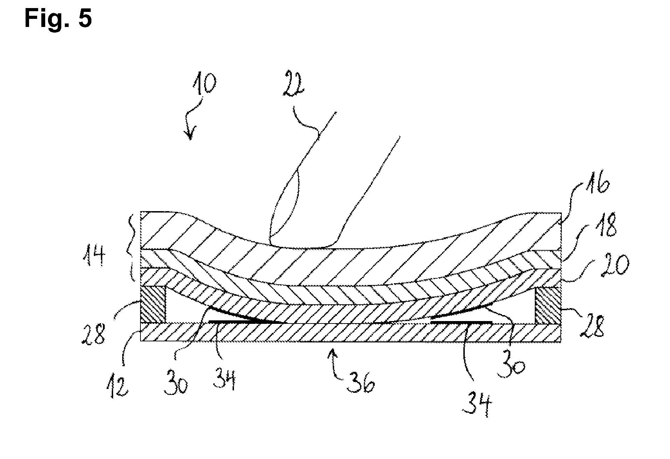

Figs. 4 and 5 illustrate the situation in case of a force applied off-centre with respect to the point of initial contact. In Fig. 4, a small force is applied off-centre. The cover plate 14 and the base plate 12 contact one another in the region around the central point of the input zone. It is worthwhile noting that the rigidity of the cover plate 14 is chosen such that, also in this case, the initial contact between the cover plate 14 and the base plate 12 occurs in proximity of the defined central point. As the applied force increases, the zone of physical contact gradually extends towards the periphery of the input zone and the first and second electrodes eventually contact one another, as show in Fig. 5.

## Claims

1. An input device with an input zone, said input device comprising;
a support plate
a cover plate including a capacitive sensing arrangement associated with said input zone for capacitively detecting position and/or movement of a user's finger or stylus, said cover plate having an upper surface facing away from said support plate and a lower surface facing towards said support plate,
one or more spacers arranged at a periphery of said input zone, said one or more spacers mounting said cover plate on said support plate in such a way that said cover plate spans over said support plate in said input zone, said cover plate being depressible towards said support plate in said input zone by a user;
a pressure-responsive switch associated with said cover plate and said support plate, said pressure-responsive switch including at least one first electric circuit element arranged on said lower surface of the cover plate and at least one second electric circuit element arranged on said support plate in facing relationship with said at least one first electric circuit element in such a way that said at least one first electric circuit element and said at least one second electric circuit element can be brought into contact when said cover plate is depressed towards said support plate;
wherein said cover plate has a rigidity such that, with increasing force acting on said first surface in direction of said support plate, a physical contact zone develops initially at a defined central point of said input zone and then gradually extends towards the periphery of said input zone, and wherein said at least one first electric circuit element and said at least one second electric circuit element of said pressure-responsive switch are arranged in such a way that an electrical contact is only established if said physical contact zone exceeds a predefined radius around said central point of the input zone.

2. The input device as claimed in claim 1, wherein said capacitive sensing arrangement comprises a plurality of electrodes arranged in a matrix configuration.

3. The input device as claimed in claim 1 or 2, wherein said predefined radius around said central point is comprised in the range from 10 to 50% of the smallest lateral extension of said input zone.

4. The input device as claimed in claim 1 or 2, wherein said predefined radius around said central point is comprised in the range from 20 to 40% of the smallest lateral extension of said input zone.

5. The input device as claimed in any one of claims 1 to 4, wherein said pressure-responsive switch is configured as a through-mode switch.

6. The input device as claimed in any one of claims 1 to 4, wherein said pressure-responsive switch is configured as a shunt-mode switch.

7. The input device as claimed in any one of claims 1 to 6, wherein at least one of said at least one first electric circuit element and said at least one second electric circuit element is spaced from said central point by said predefined radius.

8. A touch pad configured as an input device as claimed in any one of the preceding claims.

9. An electronic appliance comprising an input device as claimed in any one of claims 1 to 7.
